# DEMANDE DE BREVET EUROPEEN

(11) **EP 1 429 121 A1**
(43) Date de publication de la demande: **16.06.2004**
(21) Numéro de dépôt: 02080288.0
(22) Date de dépôt: 13.12.2002
(51) Int. Cl.: G01F 15/00, F16K 5/02, F16K 27/06

(54) **Dispositif de réglage de débit pour fluides**

(71) Demandeur: Luxembourg Patent Company S.A., 7440 Lintgen (LU)
(72) Inventeur: Kremer, Paul, 7263 Walferdange (FR); Becker, Daniel, 54332 Wasserliesch (DE)
(74) Mandataire: Weydert, Robert

(57) **Abrégé**

Le dispositif de réglage de débit pour fluides comporte un cône fendu longitudinalement (12) et un bouchon de réglage (10) ajustable sur le cône fendu en vue de régler la largeur de la fente longitudinale (28) par serrage ou relâchage radial du cône fendu et par conséquent le débit d'un courant de fluide passant par la fente longitudinale (28).

## Description

L'invention concerne un dispositif de réglage de débit pour fluides, à installer dans un alésage d'un corps, par exemple un corps d'un robinet à gaz sous haute ou basse pression.

Selon la technique antérieure les dispositifs de réglage de débit pour fluides, tels que les fluides gazeux, sont munis d'un disque pourvu d'un orifice calibré. Le débit est fonction de la surface de passage de l'orifice calibré et de la pression du fluide en amont de ce dernier. Cet orifice qui est très petit pour des faibles débits gazeux est difficile à produire et en outre, si l'on veut changer le débit, le disque doit être remplacé par un autre disque ayant un orifice d'un diamètre différent. On a donc besoin d'une multitude de disques différents. Le réglage ne peut pas être effectué rapidement et le petit orifice doit être produit avec des tolérances très faibles ce qui est difficile à réaliser.

Pour remédier à ces désavantages la présente invention a pour objet de concevoir un dispositif de réglage de débit pour fluides qui permet un ajustage rapide et qui permet de simplifier la fabrication du dispositif de réglage.

Pour atteindre cet objectif la présente invention fournit un dispositif de réglage de débit pour fluides, à installer dans un alésage d'un corps, par exemple un corps d'un robinet à gaz sous haute ou basse pression, et comportant :
un cône fendu ayant une surface conique externe et pourvu d'un passage longitudinal ainsi que d'une fente longitudinale qui communique avec le passage et qui débouche dans la surface externe conique du cône ; et
un élément de réglage ayant une cavité conique dans laquelle le cône fendu est recevable au moins en partie, cet élément de réglage ayant un moyen formant passage communiquant avec la fente longitudinale lorsque le cône fendu est reçu dans ladite cavité et débouchant dans une surface externe de l'élément de réglage, la largeur de la fente longitudinale étant ajustable par serrage ou relâchage radial du cône fendu au moyen de l'élément de réglage en vue de régler ledit débit du fluide.

Le dispositif selon la présente permet de s'acquitter des tolérances des orifices calibrés des disques traditionnels. Le débit peut être réglé rapidement par ajustage de l'élément de réglage en vue de serrer ou comprimer le cône fendu plus ou moins fortement afin de modifier la largeur de la fente longitudinale du cône fendu. Le système selon l'invention permet d'ajuster le débit dans une gamme allant d'environ 25 litres par minute à 0,01 litres par minute, c'est-à-dire un rapport de l'ordre de 2.500 entre le débit maximum et le débit minimum. Le système selon l'invention fonctionne par laminage du fluide. De ce fait une certaine stabilité des débits est maintenue même avec une légère variation de la pression. Ceci est vrai pour les faibles débits gazeux.

L'élément de réglage est de préférence une vis ou un bouchon de réglage engagé dans une partie filetée de l'alésage du corps du robinet, et dont la position axiale sur le cône fendu est réglable par rotation de l'élément de réglage dans ledit alésage autour du cône fendu.

Deux variantes peuvent être envisagées, c'est-à-dire un système réglable une seule fois, c'est-à-dire une fois le réglage fait, le débit ne pourra qu'être diminué, il ne sera plus possible de revenir en arrière ; et un système variable, c'est-à-dire le débit pourra être ajusté à volonté dans les deux sens.

Le système variable est plus adapté aux installations fixes, le fait qu'il soit réglable dans les deux sens le rend sensible aux chocs et aux vibrations, alors que le système réglable une seule fois est particulièrement adapté pour les installations mobiles, le fait qu'il ne soit pas facilement réajustable dans les deux sens lui confère une certaine résistance aux chocs et aux vibrations.

Pour le mode d'exécution variable, c'est-à-dire ajustable dans les deux sens, la surface conique externe du cône et/ou la surface conique interne de la cavité de l'élément de réglage sont pourvues d'un traitement anti-friction en vue d'empêcher un blocage du cône dans l'élément de réglage, et l'une des extrémités du cône est montée dans le corps du robinet en vue d'empêcher l'entraînement en rotation du cône par l'élément de réglage lorsque celui-ci est tourné en vue de changer la position axiale de l'élément de réglage par rapport au cône fendu. Dans le plus simple mode d'exécution réglable seulement dans le sens d'une diminution du débit l'on peut renoncer au traitement de surface et au moyen anti-rotation.

Le système selon l'invention est adapté pour toutes les applications nécessitant la calibration du débit d'un fluide par le biais d'une pression dynamique et d'un orifice calibré. Le système est très robuste et peut trouver des applications dans la haute pression pour le réglage des gaz corrosifs ou peu compatibles.

Le moyen formant passage peut comporter un ou plusieurs passages radiaux formés dans le bouchon de réglage, une rainure circonférentielle formée dans la surface conique du bouchon et communiquant avec les passages, et/ou une rainure circonférentielle communiquant avec les passages et formée dans la surface externe du cône et intersectée par la fente longitudinale.

L'invention sera maintenant expliquée en plus grand détail en référence aux dessins annexés, sur lesquels :
la figure 1 montre un dispositif de réglage selon un premier mode d'exécution de ladite présente invention, installé dans un corps, par exemple un corps d'un robinet à gaz ;
la figure 2 est un agrandissement du détail encerclé A de la figure 1 ;
la figure 3 montre un dispositif de réglage d'un second mode d'exécution de la présente invention, selon lequel une partie de forme hexagonale est prévue à l'extrémité à grand diamètre du cône fendu, engagée dans une cavité de forme pareille d'un corps de robinet ou autre, en vue d'empêcher la rotation du cône fendu si la vis ou le bouchon de réglage est tourné pour régler le débit ;
la figure 4 est une vue en perspective du bouchon et du cône fendu du mode d'exécution de la figure 3 montrant la partie hexagonale du cône fendu écartée de la cavité de forme correspondante du corps de robinet ; et
la figure 5 est une vue en perspective du cône fendu du mode d'exécution de la figure 3 pour montrer la partie hexagonale à l'extrémité à grand diamètre du cône.

Tel que représenté sur les figures, le dispositif comporte un élément de réglage 10 et un cône fendu 12 qui sont installés dans un alésage 14 formé dans un corps de robinet 16 ou autre. Un passage d'amenée du gaz 18 est formé dans le corps 16 et débouche dans la paroi interne circonférentielle de l'alésage 14, et un passage de récupération 20 du fluide est formé dans le corps 16 et s'étend du fond de l'alésage 14. L'alésage 14 a en outre une partie filetée 22 à plus grand diamètre à proximité de l'ouverture de l'alésage 14.

A l'intérieur de la cavité 14 se trouve le cône fendu 12 qui a une surface externe conique 24 ainsi qu'un passage longitudinal 26 et une fente longitudinale 28 s'étendant le long de la longueur totale du cône fendu 12 d'un bout du cône jusqu'à l'autre bout de celui-ci. Le cône fendu 12 peut avoir une partie cylindrique 13 à son extrémité à grand diamètre. Dans la position assemblée du dispositif de réglage le passage longitudinal 26 du cône fendu est en communication avec le passage de récupération 20 du corps 16 et le cône fendu 12 repose normalement sur la surface de fond de l'alésage 14. La fente longitudinale 28 est en communication avec le passage longitudinal 26 et débouche dans la surface externe conique 24 du cône fendu 12.

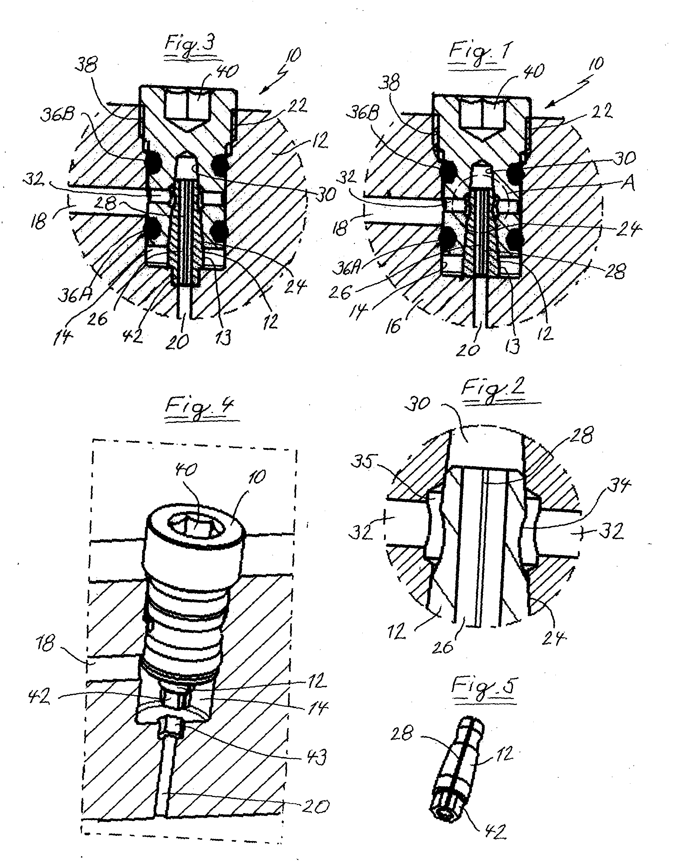

L'élément de réglage 10 qui est formé, de préférence, par une vis ou un bouchon de réglage 10 est pourvu d'une cavité conique 30 coaxiale avec l'axe longitudinal de la vis de réglage 10 et dans laquelle le cône fendu 12 est reçu au moins partiellement. La vis de réglage 10 est pourvu d'un ou plusieurs passages radiaux 32 qui sont en communication avec la cavité conique 30 et qui communiquent avec la fente longitudinale 28 du cône fendu 12 au moyen d'une rainure annulaire 34 circonférentielle formée dans la surface conique externe 24 du cône fendu 12 entre ses extrémités opposées et qui est intersectée par la fente longitudinale 28. Cependant, au lieu de la rainure 34, le ou les passages radiaux 32 pourraient aussi déboucher à leurs extrémités internes dans une rainure annulaire circonférentielle 35 formée dans la surface conique de la cavité 30 autour du cône fendu 12. Mais, de préférence, une rainure annulaire 34 est formée dans la surface externe 24 du cône fendu 12 et une rainure circonférentielle 35 est aussi formée dans la surface conique de la cavité 30, comme représenté sur les figures 1 et 2. Le ou les passages radiaux 32 débouchent à leurs extrémités externes dans la surface circonférentielle externe de la vis de réglage 10.

Deux joints d'étanchéité 36A et 36B sont disposés dans des gorges annulaires de la vis à réglage 10 de part et d'autre des passages radiaux 32 et du passage d'amenée 18 et sont en engagement étanche avec la surface circonférentielle interne de l'alésage 14 dans la position assemblée du dispositif de réglage de débit. La tête de la vis de réglage est pourvue d'un filetage externe 38 vissé dans la partie filetée 22 de l'alésage 14. La tête de la vis de réglage est également pourvue d'une cavité non-circulaire 40, par exemple hexagonale ou carrée pour l'application d'un outil en vue du réglage de la position axiale de la vis 10 par rapport au cône fendu 12.

L'angle de conicité de la surface externe 24 du cône fendu 12 et de la surface interne de la cavité conique 30 est situé de préférence dans une gamme allant d'environ 5 degrés à environ 20 degrés.

Par réglage de la position axiale de la vis 10 par rapport au cône fendu 12 le débit peut être varié très précisément par réglage de l'épaisseur de la fente longitudinale 28. Pour réduire le débit du fluide la vis de réglage 10 est vissée plus profondément dans l'alésage 14 de sorte que la largeur de la fente axiale 28 soit réduite. Dû à ce serrage de la vis 10 le cône 18 peut se bloquer à l'intérieur de la vis de réglage 10 empêchant le retour vers un débit plus élevé. En vue de permettre le réglage dans les deux sens, la surface externe 24 du cône fendu 12 ou la surface interne de la cavité conique 30, ou les deux, sont pourvues d'un traitement de surface anti-friction en vue de réduire la friction entre ces deux surfaces, par exemple par nicklage chimique, ou par l'application d'une couche argentée ou de Teflon®. En outre, en vue d'empêcher la rotation du cône fendu 12 en réponse à une rotation de la vis de réglage 10, le cône fendu 12 peut être pourvu à son extrémité à grand diamètre d'une partie non-circulaire 42, par exemple une partie carrée ou hexagonale reçue dans une cavité ou un creux de forme correspondante 43 pratiqué dans la surface de fond de l'alésage 14 (figures 3, 4 et 5).

Au lieu de ces parties de forme non-circulaire, la rotation du cône fendu 12 peut aussi être empêchée par un ou plusieurs goujons de blocage (non-représentés) empêchant la rotation du cône fendu 12 et son mouvement axial avec la vis de réglage 10. Ce ou ces goujons de blocage sont insérés dans le corps de robinet et engagent le cône fendu 12. L'axe longitudinal des goujons croise l'axe longitudinal du cône, de préférence en un angle droit.

Il est encore à noter que le système est réversible, c'est-à-dire le fluide peut être amené par le passage 18 et récupéré par le passage 20 ou bien amené par le passage 20 et récupéré par le passage 18.

## Revendications

1. Dispositif de réglage de débit pour fluides, à installer dans un alésage d'un corps, par exemple un corps d'un robinet à gaz sous haute ou basse pression, et comportant :
un cône fendu ayant une surface conique externe et pourvu d'un passage longitudinal ainsi que d'une fente longitudinale qui communique avec le passage et qui débouche dans la surface externe conique du cône ; et
un élément de réglage ayant une cavité conique dans laquelle le cône fendu est recevable au moins en partie, cet élément de réglage ayant un moyen formant passage communiquant avec la fente longitudinale lorsque le cône fendu est reçu dans ladite cavité et débouchant dans une surface externe de l'élément de réglage, la largeur de la fente longitudinale étant ajustable par serrage ou relâchage radial du cône fendu au moyen de l'élément de réglage en vue de régler ledit débit du fluide.

2. Dispositif selon la revendication 1, dans lequel l'élément de réglage est une vis ou un bouchon de réglage à visser dans une partie filetée de l'alésage dudit corps, et dont la position axiale sur le cône fendu est réglable par rotation de l'élément de réglage dans ledit alésage autour du cône fendu.

3. Dispositif selon la revendication 1 ou 2, dans lequel l'élément de réglage est pourvu de joints d'étanchéité disposés de part et d'autre de l'endroit où le moyen formant passage débouche dans la surface externe de l'élément de réglage, ces joints engageant de façon étanche une surface interne de l'alésage si le dispositif de réglage se trouve dans cet alésage.

4. Dispositif selon la revendication 2, dans lequel le cône fendu est pourvu d'un moyen formé pour coopérer avec un moyen associé dudit corps lorsque le dispositif de réglage est disposé dans ledit alésage, en vue d'empêcher une rotation du cône en réponse à un mouvement de rotation de l'élément de réglage.

5. Dispositif selon la revendication 4, dans lequel le moyen pour empêcher une rotation du cône comporte une partie non-circulaire prévue à l'une des extrémités du cône, à engager dans une partie non-circulaire de forme correspondante dudit alésage.

6. Dispositif selon la revendication 4, dans lequel le moyen pour empêcher une rotation du cône est au moins un goujon de blocage qui engage le cône et dont l'axe longitudinal croise l'axe longitudinal du cône.

7. Dispositif selon l'une quelconque des revendications 1 à 6, dans lequel au moins l'une de la surface conique externe du cône et de la surface conique interne de la cavité conique est pourvue d'un traitement de surface anti-friction.

8. Dispositif selon l'une quelconque des revendications précédentes, dans lequel le passage longitudinal et la fente longitudinale s'étendent le long de la longueur totale du cône.

9. Dispositif selon l'une des revendications précédentes, **caractérisé en ce qu'**une rainure annulaire circonférentielle est formée dans la surface conique externe du cône fendu, qui est intersectée par la fente longitudinale, le moyen formant passage de l'élément de réglage communiquant avec cette rainure circonférentielle.

10. Dispositif selon l'une des revendications précédentes, **caractérisé en ce que** le moyen formant passage comporte au moins un passage radial communiquant avec une rainure annulaire circonférentielle formée dans la surface circonférentielle de la cavité conique et s'étendant autour du cône fendu.
